# DEMANDE DE BREVET EUROPEEN

(11) **EP 1 775 094 A1**
(43) Date de publication de la demande: **18.04.2007**
(21) Numéro de dépôt: 06291608.5
(22) Date de dépôt: 13.10.2006
(51) Int. Cl.: B29C 45/00, B60Q 1/04

(54) **Procédé de moulage par injection d'articles en matière plastique comportant une zone de moindre résistance, article obtenu par ce procédé, en particulier projecteur de véhicule automobile**

(30) Priorité: 17.10.2005 FR 0510572
(71) Demandeur: VALEO VISION, 93012 Bobigny Cédex (FR)
(72) Inventeur: Nunez Bootello, Juan-Pablo, 41007 Sevilla (ES); Castillo Jimenez, Jose, 23600 Martos (Jaen) (ES)

(57) **Abrégé**

Le procédé selon l'invention est prévu pour le moulage par injection d'un article en matière plastique (19) dont la forme est définie par les parois d'un moule muni au moins d'un orifice d'injection, ledit article devant comporter au moins une zone prédéterminée présentant une résistance mécanique inférieure à un seuil prédéterminé selon une direction prédéterminée (AV-AR). Conformément au procédé selon l'invention, pendant le remplissage de la partie du moule définissant ladite zone, les lignes de flux (24) de la matière plastique fondue sont substantiellement perpendiculaires à la direction prédéterminée (AV-AR). Ce procédé est particulièrement adapté pour une mise en oeuvre dans la fabrication d'un boîtier de projecteur de véhicule automobile. Conformément à l'invention, les chaînes polymériques de la matière plastique constituant le boîtier sont alors substantiellement dirigées selon un axe transversal du boîtier.

## Description

### DOMAINE TECHNIQUE DE L'INVENTION.

La présente invention concerne un procédé de moulage par injection d'un article en matière plastique comportant une ou des zones dont la résistance mécanique est moindre par rapport au reste de l'article, ainsi que l'article obtenu par ce procédé.

Elle concerne aussi en particulier un procédé de moulage par injection permettant de fabriquer des projecteurs de véhicules automobiles, dont le boîtier est susceptible de se déformer, ou de se briser, pour absorber une partie de l'énergie de l'impact en cas de choc avec un piéton, et diminuer ainsi le risque de blessure grave.

Les produits manufacturés auxquels se rapporte également la présente invention sont donc notamment les accessoires pour automobiles, et les projecteurs offrant une sécurité passive.

### ARRIERE PLAN TECHNOLOGIQUE DE L'INVENTION.

Le procédé de moulage par injection est utilisé très couramment pour fabriquer une très grande diversité d'articles en matière plastique.

Quand il s'agit d'objets d'usage « grand public », tels que des d'appareils électroménagers, l'aspect de surface est souvent essentiel, tandis que pour des pièces plus « techniques », telles que des éléments de machine, prime la résistance mécanique.

Dans les deux cas, le technicien spécialisé en plasturgie a cherché à éliminer le défaut d'homogénéité du flux de matière plastique créé par le processus d'injection dans un moule de forme complexe, car ce défaut conduit à des criques dans la matière préjudiciable au fini de la surface, ou à des pailles internes susceptibles de compromettre la solidité de la pièce.

Il est également connu qu'une orientation particulière du flux de matière plastique pendant le remplissage du moule se traduit par la même orientation privilégiée des chaînes polymériques dans l'article final après refroidissement. Les propriétés mécaniques de cet article sont alors anisotropes : la résistance à la traction est maximale dans la direction du flux, minimale dans une direction perpendiculaire au flux.

Les problèmes posés par la fabrication d'articles de qualité par la technique du moulage par injection, ainsi que les solutions techniques connues pour résoudre ceux-ci, sont décrits dans de nombreux traités, tels que celui écrit par Robert A. Malloy, intitulé en anglais « Plastic Part Design for Injection Molding » (en français, « Conception de Pièces en Matière Plastique pour le Moulage par Injection »), et publié en 1994 aux éditions Hanser.

Dans cet ouvrage est notamment analysée la genèse des lignes de soudure qui se produisent quand deux flux de matière plastique fondue ayant suivi deux chemins différents entre les parois du moule, soit à partir d'un même point d'injection, soit à partir de deux points d'injection séparés, se rencontrent.

Cette situation se produit souvent au moment du remplissage d'un moule de forme complexe, et nécessitant plusieurs points d'injection.

Les méthodes de simulations sur ordinateur permettent de nos jours de prédire la formation des lignes de soudure en fonction de la topologie du moule et des paramètres de l'injection. En mettant en oeuvre ces méthodes, le plasturgiste étudie donc habituellement la forme de la pièce à fabriquer afin de limiter l'apparition de ces lignes de soudure.

Dans le domaine de l'automobile, on a constaté au cours de ces dernières années que de plus en plus d'éléments d'un véhicule étaient réalisés en matière plastique, notamment par moulage par injection.

Les constructeurs et les équipementiers du secteur sont donc confrontés aux difficultés générales liées à cette technique de fabrication exposées ci-dessus, et y apportent les solutions standard.

Un projecteur de véhicule automobile, par exemple, comprend essentiellement un boîtier arrière en plastique, supportant des blocs optiques, fermé vers l'avant par une glace transparente, également en plastique.

Il va de soi que la glace doit être exempte de défauts, et que son moule doit donc être conçu dans les règles de l'art.

Le boîtier du projecteur doit présenter la rigidité appropriée pour maintenir efficacement les blocs optiques et éviter les variations aléatoires de direction des faisceaux lumineux en circulation. La forme et la structure du boîtier sont donc optimisées au moyen de systèmes de conception assistée sur ordinateur.

Une contrainte supplémentaire, qui n'est pas technique, pèse sur les projecteurs de véhicules automobiles récents : celle de la sécurité passive.

Il s'agit de limiter le risque de blessure grave des piétons en cas de choc frontal avec le véhicule.

Dans ce but, il a été proposé des projecteurs articulés élastiquement sur le châssis du véhicule. Mais, il est clair que, dans ces conditions, la stabilité des faisceaux des projecteurs ne peut être assurée.

Un dispositif susceptible de pallier cet inconvénient est décrit dans la demande de brevet français FR 2.573.707. Le boîtier du projecteur comporte des moyens de fixation semi-rigides et de guidage longitudinal par rapport au châssis du véhicule. De la sorte, le projecteur peut reculer sous l'action d'un choc dans la direction longitudinale du véhicule.

Une autre façon de satisfaire aux contraintes de sécurité, est de prévoir des moyens structuraux permettant une diminution de la longueur du projecteur en cas de choc avant.

Par exemple, le boîtier de projecteur, en matière plastique moulée par injection, décrit dans la demande de brevet allemand DE 101.01.789, comporte une zone de moindre épaisseur à la base de la glace avant. Cette zone est le lieu privilégié de la brisure qui se produit lors du choc.

Dans ce dernier exemple, le boîtier est de forme simple.

Le principe élémentaire de la création d'une zone de moindre résistance mécanique en diminuant localement l'épaisseur du boîtier est évidemment applicable à des projecteurs de formes beaucoup plus complexes, répondant notamment aux préoccupations esthétiques des stylistes d'aujourd'hui.

Mais il n'est pas sûr que la mise en oeuvre de ce principe élémentaire, sans tenir compte par ailleurs des zones de faiblesse créées par les défauts, plus ou moins bien contrôlés, liés à l'injection d'une forme complexe, ne se traduisent pas par un comportement complètement aléatoire du boîtier sous le choc, et donc par une incertitude quant à la gravité des blessures infligées au piéton.

Il existe donc un besoin pour la mise au point d'un procédé de moulage par injection permettant de fabriquer un article dont la rupture sous contrainte est parfaitement prédictible quelle que soit la complexité de sa forme.

### DESCRIPTION GENERALE DE L'INVENTION.

La présente invention vise donc un procédé général de moulage par injection d'un article en matière plastique dont la forme est définie par les parois d'un moule muni au moins d'un orifice d'injection, cet article devant comporter au moins une zone prédéterminée présentant une résistance mécanique inférieure à un seuil prédéterminé selon une direction prédéterminée.

Le procédé général selon l'invention est remarquable en ce que, pendant le remplissage de la partie du moule définissant cette zone de moindre résistance, les lignes de flux de la matière plastique fondue sont substantiellement perpendiculaires à la direction prédéterminée.

De préférence, au moins une ligne de soudure obtenue par la jonction d'au moins deux flux antagonistes est formée dans cette même zone.

Ces flux antagonistes sont avantageusement créés par au moins un insert placé dans le moule.

Alternativement ou simultanément à la présence de cet insert, le moule comporte préférentiellement au moins deux orifices d'injection agencés de part et d'autre de la zone prédéterminée.

Le procédé général de moulage par injection selon l'invention est aussi remarquable en ce que les parois du moule présentent au niveau de cette zone un rayon de courbure de faible valeur par rapport à l'épaisseur de celle-ci, de préférence inférieur au quart de l'épaisseur de la zone.

Le procédé général selon l'invention tire bénéfice du fait que les parois du moule définissent au moins un élément de renforcement au voisinage de la zone de moindre résistance de l'article en formation.

En particulier, la présente invention vise un procédé de moulage par injection d'un boîtier de projecteur de véhicule automobile. Ce boîtier devant présenter une résistance mécanique inférieure à un seuil prédéterminé selon un axe longitudinal (les axes transversaux et longitudinaux du boîtier sont définis respectivement par les directions transversales et longitudinales du véhicule), il est formé par au moins un flux de matière plastique fondue dirigé substantiellement selon un axe transversal.

De préférence, le boîtier du projecteur est formé par au moins deux flux antagonistes de matière plastique fondue dirigés substantiellement selon à un axe transversal et formant une ligne de soudure transversale entre la partie inférieure et la partie supérieure de ce boîtier.

Alternativement ou simultanément à la formation de cette ligne de soudure, on forme dans une zone de transition entre la partie inférieure et la partie supérieure du boîtier du projecteur une surface présentant un rayon de courbure de faible valeur par rapport à l'épaisseur de cette zone, de préférence inférieur au quart de l'épaisseur de la zone.

Autant que de besoin, on tire également bénéfice de la formation dans la partie supérieure du boîtier de nervures de renforcement dirigées selon un axe longitudinal de ce boîtier.

Plus précisément, le procédé de moulage par injection d'un boîtier de projecteur de véhicule automobile selon l'invention se caractérise par le fait que la matière plastique est injectée, d'une part, au niveau de la partie supérieure du bord avant du boîtier, et, d'autre part, à l'arrière de ce boîtier au niveau de la partie supérieure du bord de l'ouverture destinée à recevoir le bloc optique central inférieur du projecteur (l'avant et l'arrière du boîtier sont définis respectivement par l'avant et l'arrière du véhicule auquel le projecteur est destiné).

La présente invention vise aussi un article générique en matière plastique moulé par injection comportant au moins une zone prédéterminée présentant une résistance mécanique inférieure à un seuil prédéterminé selon une direction prédéterminée.

Un tel article est remarquable en ce que les chaînes polymériques de la matière plastique au niveau de la zone de moindre résistance sont substantiellement perpendiculaires à cette direction prédéterminée.

De préférence, cette zone comporte au moins une ligne de soudure, et avantageusement au moins un évidement.

Un autre trait caractéristique de cet article générique est qu'il présente en surface les traces d'au moins deux points d'injection de part et d'autre de sa zone de moindre résistance.

Selon l'invention, cette zone présente fort avantageusement une paroi de rayon de courbure de faible valeur par rapport à son épaisseur; son rayon de courbure est de préférence inférieur au quart de son épaisseur.

On tire bénéfice du fait que l'article générique selon l'invention comporte au moins un élément de renforcement au voisinage de la zone de moindre résistance.

La totalité ou une partie des caractéristiques ci-dessus de l'article générique selon l'invention, lui confère la propriété remarquable d'être substantiellement séparable en au moins deux parties, de part et d'autre de la zone de moindre résistance, sous l'action d'un effort d'intensité supérieure au seuil prédéterminé qui lui serait appliqué selon la direction prédéterminée.

La présente invention concerne aussi un projecteur de véhicule automobile comportant un boîtier en matière plastique du type de l'article générique décrit ci-dessus, c'est-à-dire présentant une résistance mécanique inférieure à un seuil prédéterminé selon un axe longitudinal (on rappelle que les axes transversaux et longitudinaux du boîtier sont définis respectivement par les directions transversales et longitudinales du véhicule auquel est destiné le projecteur).

Le boîtier de ce projecteur de véhicule automobile est remarquable en ce que les chaînes polymériques de la matière plastique le constituant sont substantiellement dirigées selon un axe transversal.

De préférence, le projecteur comporte une ligne de soudure transversale entre la partie inférieure et la partie supérieure de son boîtier.

Avantageusement, la surface d'une zone de transition entre la partie inférieure et la partie supérieure du boîtier présente un rayon de courbure de faible valeur par rapport à l'épaisseur de cette zone; il est de préférence inférieur au quart de l'épaisseur.

Le projecteur de véhicule automobile selon l'invention se distingue par le fait que son boîtier présente en surface les traces de deux points d'injection. L'une des traces est située au niveau de la partie supérieure du bord avant du boîtier. L'autre trace est située à l'arrière du boîtier au niveau de la partie supérieure du bord de l'ouverture destinée à recevoir le bloc optique central inférieur du projecteur (on rappelle que l'avant et l'arrière du boîtier sont définis respectivement par l'avant et l'arrière du véhicule auquel est destiné le projecteur).

Tout ou partie des spécifications énoncées ci-dessus donne au projecteur selon l'invention la caractéristique remarquable de présenter un boîtier dont la partie inférieure et la partie supérieure sont substantiellement séparables sous l'action d'un effort longitudinal de compression d'intensité supérieure au seuil prédéterminé exercé sur celui-ci.

La présente invention vise également toute utilisation du procédé général de moulage par injection exposé ci-dessus dans la fabrication d'un accessoire de véhicule automobile, ainsi que dans la fabrication d'un feu ou d'un projecteur de véhicule automobile, et notamment dans celle du boîtier de celui-ci.

La présente invention concerne aussi l'utilisation de l'article générique en plastique moulé par injection décrit ci-dessus comme tout ou partie d'un accessoire de véhicule automobile, comme pièce d'un feu ou d'un projecteur, et notamment du boîtier de celui-ci.

Ces quelques spécifications essentielles auront rendu évidents pour l'homme de métier les avantages apportés par le procédé général de moulage par injection selon l'invention, et de son application à la fabrication de projecteurs de véhicules automobiles, par rapport à l'état de la technique antérieur, ainsi que les avantages des produits manufacturés par ce procédé.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

Les **Figures 1a et 1b** illustrent l'effet de l'orientation du flux sur la résistance à la traction d'une éprouvette en matière plastique selon les connaissances générales de l'homme du métier.
Les **Figures 2a et 2b** illustrent la formation d'une ligne de soudure respectivement par un insert et par deux points d'injection selon les connaissances générales de l'homme du métier.
Les **Figures 3a, 3b et 3c** illustrent schématiquement les différents principes de conception d'un boîtier de projecteur automobile mis en oeuvre par l'invention, respectivement :
   - principe de la concentration des contraintes (connu en soi);
   - principe de l'orientation des flux;
   - principe de la localisation des lignes de soudure.
Les **Figures 4a, 4b et 4c** reproduisent une simulation effectuée sur ordinateur et illustrent le procédé de moulage d'un boîtier de projecteur de véhicule automobile selon l'invention.
Les **Figures 5a et 5b** montrent respectivement la vue de face et la vue de gauche d'un boîtier de projecteur de véhicule automobile selon l'invention.

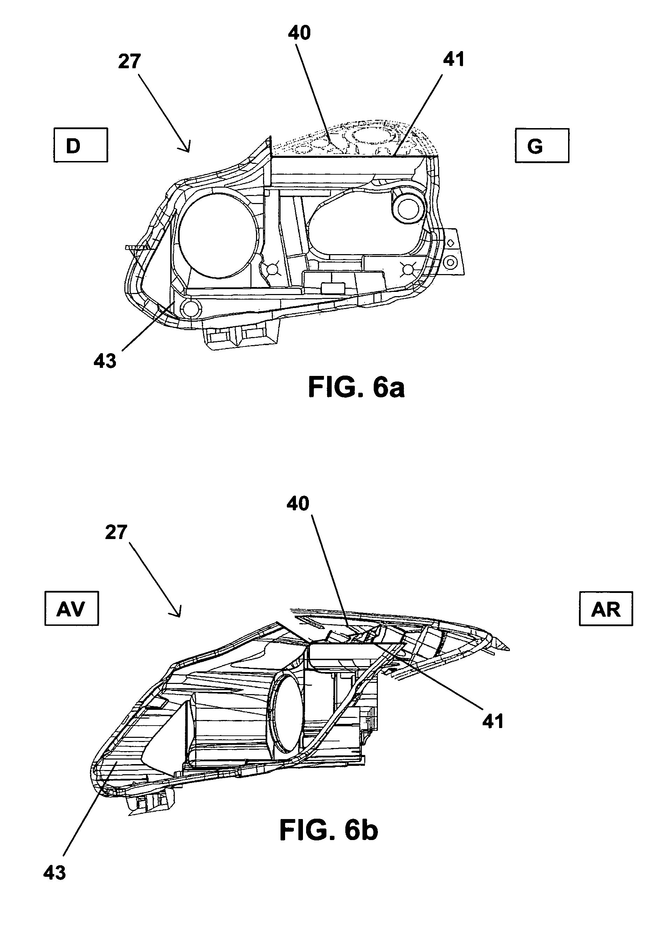

Les **Figures 6a et 6b** montrent respectivement la vue de face et la vue de gauche du boîtier de projecteur de véhicule automobile selon l'invention, représenté sur les **Figures 5a et 5b,** après un choc.

### DESCRIPTION DES MODES DE REALISATION PREFERES DE L'INVENTION.

Le plasturgiste connaît les difficultés de réalisation de pièces de forme complexe exemptes de défauts par la technique de moulage par injection et cherche habituellement à limiter les défectuosités en optimisant la structure de ces pièces et les paramètres de l'injection.

L'orientation des flux pendant le remplissage du moule se traduit, après refroidissement, par une anisotropie des propriétés mécaniques de la pièce injectée qui n'est généralement pas souhaitable.

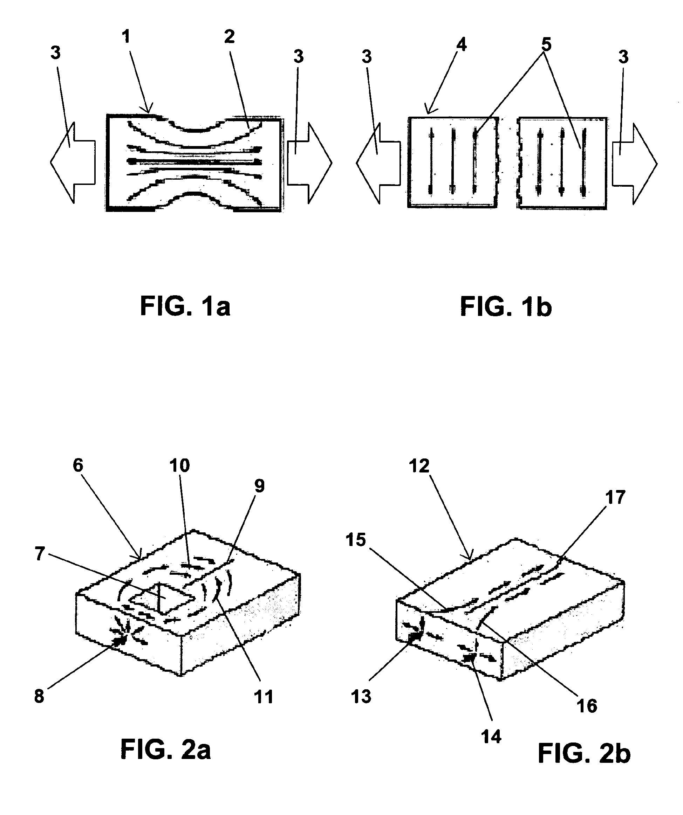

La **Figure 1a** montre schématiquement une éprouvette 1 de matière plastique réalisée par un flux orienté longitudinalement. Dans ce cas les chaînes polymériques 2 sont alignées longitudinalement, ce qui confère à l'éprouvette 1 une résistance à la traction 3 élevée.

La **Figure 1 b** montre schématiquement une autre éprouvette 4 de matière plastique réalisée par un flux orienté transversalement. Dans ce cas les chaînes polymériques 5 sont alignées transversalement, ce qui confère à cette éprouvette 4 une résistance à la traction 3 plus faible que celle de la première éprouvette 1.

Pour un même effort longitudinal 3, l'une 1 s'allonge **(Figure 1a),** l'autre 4 se brise (**Figure 1b**).

Une autre cause importante de défectuosités connue est la formation de lignes de soudure au cours du moulage.

La **Figure 2a** montre une pièce 6 injectée comportant un évidement 7.

Dans le cas où un seul orifice d'injection 8 a été utilisé en amont de l'insert correspondant à l'évidement 7, il se forme au moment du moulage, en aval dans la direction du flux, une ligne de soudure 9. Cette ligne de soudure 9 résulte de la séparation en deux flux antagonistes 10, 11 du flux initial en amont de l'insert, puis de la jonction de ces deux flux 10, 11 en aval.

La **Figure 2b** montre une pièce 12 injectée au moyen de deux orifices d'injection dont elle porte les traces 13, 14.

Au moment du moulage, à partir d'une certaine distance des trous d'injection 13, 14, les deux flux 15, 16 de matière plastique fondue se refroidissent et ne fusionnent plus complètement. Il se forme alors une ligne de soudure 17 visible à la surface de la pièce 12.

L'homme de métier élimine les défectuosités décrites précédemment en concevant des moules où les chemins des flux sont de longueurs réduites, et en augmentant la pression et la température d'injection de manière à réaliser une meilleure diffusion de la matière plastique fondue.

La présente invention repose sur une démarche exactement inverse : des défauts d'homogénéité sont volontairement générés au cours du moulage par injection pour produire des articles en matière plastique présentant une anisotropie contrôlée des propriétés mécaniques.

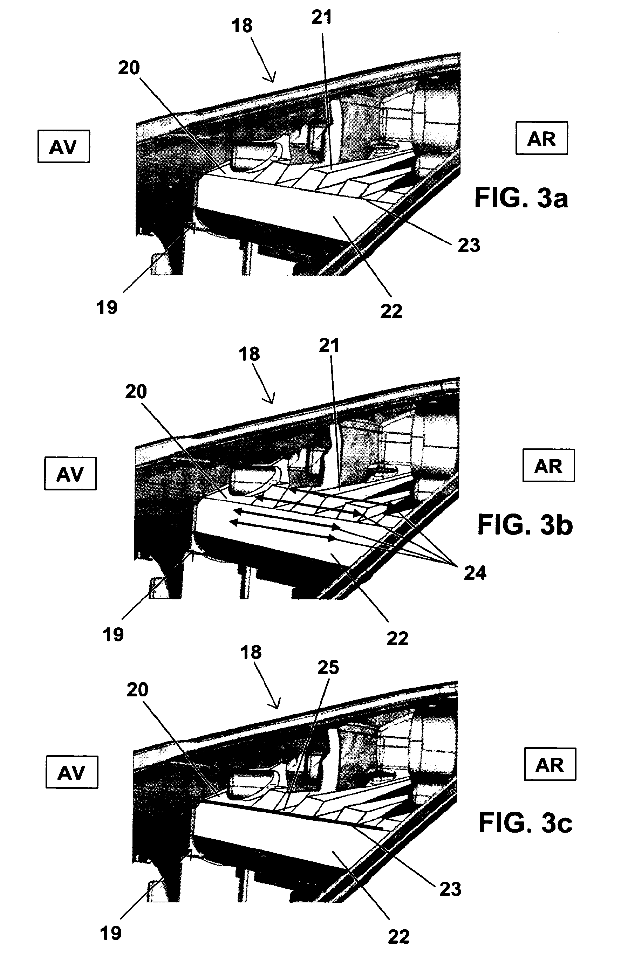

La **Figure 3a** montre schématiquement un projecteur gauche 18 en place à l'avant AV d'un véhicule automobile, et notamment son boîtier 19.

De manière connue en soi la partie supérieure 20 du boîtier 19 est rigidifiée par des nervures longitudinales 21. La partie inférieure 22 du boîtier 19 adjacente comporte une plaque verticale transversale. Au cours d'un choc frontal, les contraintes exercées sur le boîtier 19 sont, dans cet agencement spécifique, concentrées le long de la frontière 23 entre la partie rigidifiée 20 et la partie 22 du boîtier 19 qui ne l'est pas. Il s'ensuit qu'une rupture a plus de chance de se produire selon cette frontière 23.

La **Figure 3b** montre schématiquement le principe de l'orientation des flux appliqué au boîtier 19 du même projecteur gauche 18 en place à l'avant AV d'un véhicule automobile. Pendant le moulage de la pièce 19, les flux 24 de matière plastique fondue ont été orientés substantiellement selon des axes transversaux D-G.

De la sorte, le boîtier 19 présente une résistance mécanique réduite dans une direction perpendiculaire aux flux, c'est-à-dire selon une direction d'avant AV en arrière AR.

La **Figure 3c** montre la localisation d'une ligne de soudure 25 entre la partie supérieure 20 et la partie inférieure 22 du boîtier 19 du projecteur 18. La présence de cette ligne de soudure favorise une rupture le long de l'arête 23.

Les trois principes de concentration des contraintes, d'orientation des flux et de la localisation des lignes de soudures illustrés par les **Figures 3a**, **3b et 3c** sont appliqués de préférence simultanément pour la conception d'un boîtier.

L'épaisseur du boîtier 19 est aussi avantageusement diminuée au niveau de la zone de rupture 23 souhaitée. Simultanément ou alternativement, l'arrondi de l'arrête 23 de liaison entre la plaque 22 du boîtier 19 et la partie supérieure nervurée 20 est de faible rayon, typiquement inférieur au quart de l'épaisseur de la paroi. Le résultat de ces deux caractéristiques est une diminution supplémentaire de la résistance mécanique de cette zone 23.

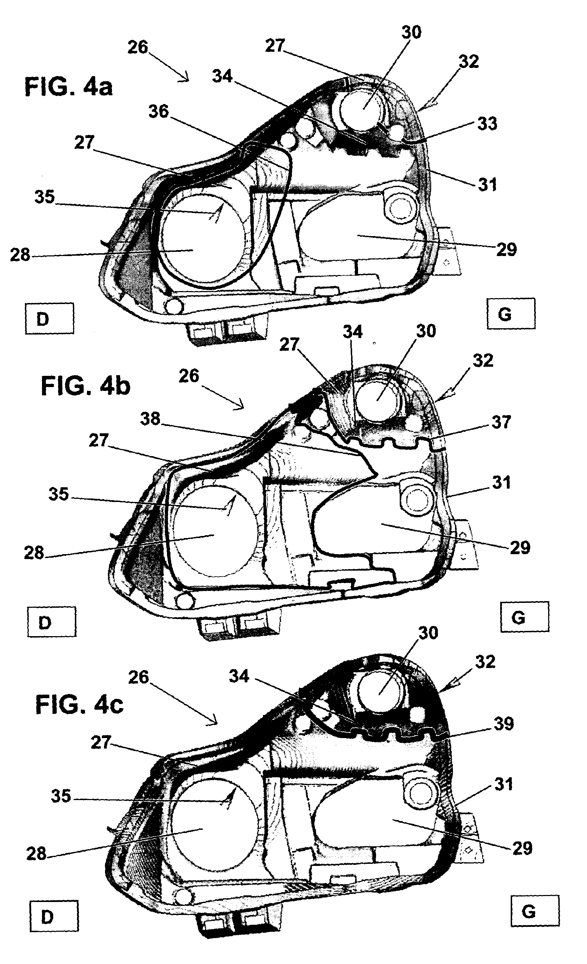

Un exemple concret de mise en application des principes ci-dessus est bien illustré par les images provenant d'une simulation sur ordinateur du processus d'injection d'un boîtier 27, qui sont reproduites sur les **Figures 4a**, **4b et 4c**.

Ces images montrent en transparence, et en vue de face, le moule 26 d'un boîtier 27 de projecteur, et ce boîtier 27 en formation pour des valeurs appropriées des paramètres d'injection.

La partie arrière du boîtier 27 comporte plusieurs ouvertures 28,29,30 prévues pour recevoir les blocs optiques. Le bord avant 31 du boîtier 27 constitue le plan de joint avec la glace du projecteur.

La **Figure 4a** est une vue instantanée de l'écoulement de la matière plastique fondue entre les parois du moule 26 peu après le début de l'injection.

Un premier flux issu d'un premier point d'injection 32 situé au niveau de la partie supérieure du bord avant 31 du boîtier a progressé jusqu'à une première ligne de front initiale 33 en direction de la partie du moule 26 correspondant à la zone nervurée 34 du boîtier 27.

Un second flux issu d'un second point d'injection 35 situé au niveau de la partie supérieure du bord de l'ouverture 28 destinée à recevoir le bloc optique central inférieur a progressé jusqu'à une seconde ligne de front initiale 36 en direction du premier flux.

La **Figure 4b** est une vue instantanée de l'écoulement de la matière plastique fondue entre les parois du moule 26 à une date correspondant sensiblement à la moitié de la durée du processus d'injection.

Le premier flux a progressé jusqu'à première ligne de front intermédiaire 37 au niveau de la zone nervurée 34 du boîtier 27.

Le second flux a envahi une grande partie du moule 26 jusqu'à une seconde ligne de front intermédiaire 38 faisant face à la première ligne de front intermédiaire 37.

La **Figure 4c** est une vue instantanée de l'écoulement de la matière plastique fondue entre les parois du moule 26 à la fin de l'injection.

La matière plastique fondue a rempli la totalité du moule 26, et les deux flux issus des deux points d'injection 32,35 se sont rejoints en formant une ligne de soudure 39 au niveau de la partie antérieure de la zone nervurée 34.

On aura noté que ces deux flux étaient substantiellement transversaux.

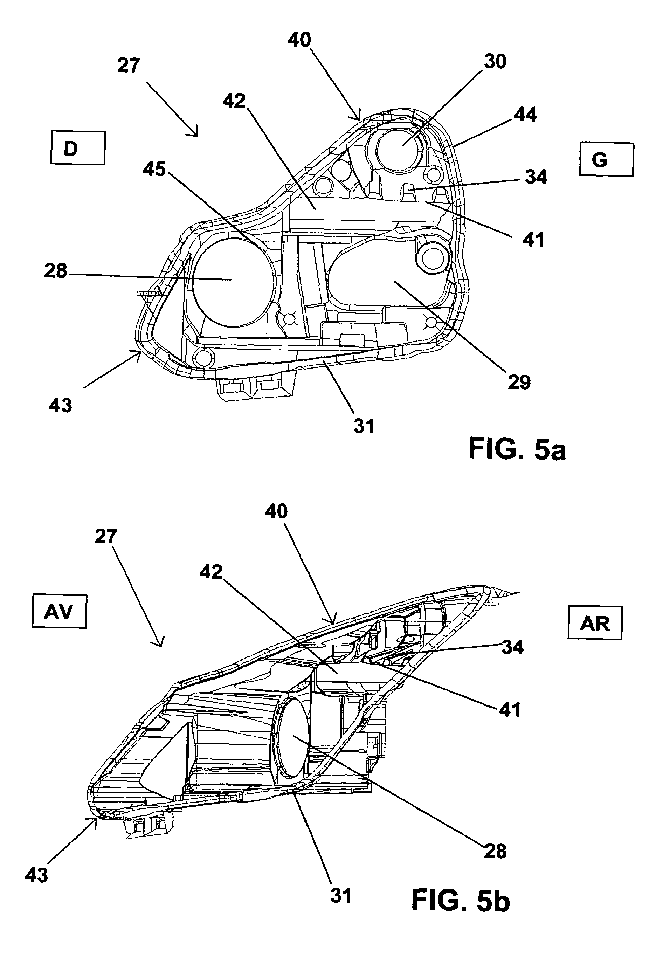

Le boîtier 27 résultant du processus d'injection décrit ci-dessus est représenté en détail sur les **Figures 5a et 5b.**

Ces deux vues montrent bien la zone nervurée 34 de la partie supérieure 40 du boîtier 27, ainsi que l'arrête 41 de la zone de transition entre la partie supérieure 40 du boîtier 27 et la plaque transversale verticale 42 de la partie inférieure 43.

Au niveau de l'arête 41, il existe :
- une concentration de contraintes due à l'association de la plaque 42 et des nervures 34 ;
- une orientation transversale des chaînes polymériques résultant de la position spécifique des points d'injection 32,35 (repérés par les traces 44,45 caractéristiques);
- Une ligne de soudure 39 obtenue par un choix approprié des paramètres d'injection.

Cette arête 41 est donc une ligne de rupture privilégiée en cas de choc, conduisant à l'affaissement de la partie supérieure 40 du boîtier et à sa séparation de la partie inférieure 43, comme le montrent bien les **Figures 5a et 5b.**

Le résultat surprenant du procédé selon l'invention est que la ou les lignes de soudure inévitables sont localisées dans une zone où leur inconvénient devient un avantage, et que le reste de la pièce est alors exempt de défaut.

La reproductibilité du comportement du boîtier 27 du projecteur en cas de choc est donc accrue.

La description détaillée précédente concernait un projecteur de véhicule automobile, sans qu'il s'agisse de la seule application possible.

Le procédé de moulage par injection selon l'invention peut en effet être mis en oeuvre dans de nombreux domaines techniques où l'on utilise des articles sécables, séparables ou destructibles par un choc.

Dans le domaine de l'automobile, outre les projecteurs et les feux, on peut également citer les rétroviseurs et les couvercles de sacs gonflables de sécurité comme applications potentielles.

Comme il va de soi l'invention ne se limite donc pas aux seuls modes d'exécution préférentiels décrits ci-dessus. Elle embrasse au contraire toutes les variantes possibles de réalisation.

En particulier le nombre et la position des points d'injection spécifiés dans les exemples de procédés et produits donnés ne sont pas limitatifs : toute autre configuration qui conduirait à une rhéologie analogue ne sortirait pas du cadre de la présente invention dans la mesure où les caractéristiques de ces procédés et de ces produits résultent des revendications ci-après.

## Revendications

1. Procédé de moulage par injection d'un article en matière plastique (19,27) dont la forme est définie par les parois d'un moule (26) muni au moins d'un orifice d'injection (32,35), ledit article (19,27) devant comporter au moins une zone prédéterminée (23,41) présentant une résistance mécanique inférieure à un seuil prédéterminé selon une direction prédéterminée (AV-AR), **caractérisé en ce que**, pendant le remplissage de la partie dudit moule (26) définissant ladite zone (23,41), les lignes de flux (24) de ladite matière plastique fondue sont substantiellement perpendiculaires à ladite direction prédéterminée (AV-AR).

2. Procédé de moulage par injection d'un article en matière plastique (19,27) selon la revendication 1, **caractérisé en ce qu'**au moins une ligne de soudure (25,39) obtenue par la jonction d'au moins deux flux (24) antagonistes de ladite matière plastique fondue est formée dans ladite zone (23,41).

3. Procédé de moulage par injection d'un article en matière plastique (19,27) selon la revendication 2, **caractérisé en ce que** lesdits flux (24) antagonistes sont créés par au moins un insert placé dans ledit moule (26).

4. Procédé de moulage par injection d'un article en matière plastique (19,27) selon l'une quelconque des revendications 2 ou 3, **caractérisé en ce que** ledit moule (26) comporte au moins deux orifices d'injection (32,35) agencés de part et d'autre de ladite zone (23,41).

5. Procédé de moulage par injection d'un article en matière plastique (19,27) selon l'une quelconque des revendications 1 à 4, **caractérisé en ce que** lesdites parois présentent au niveau de ladite zone (23,41) un rayon de courbure de faible valeur par rapport à l'épaisseur de ladite zone (23,41), de préférence inférieur au quart de l'épaisseur de ladite zone (23,41).

6. Procédé de moulage par injection d'un article en matière plastique (19,27) selon l'une quelconque des revendications 1 à 5, **caractérisé en ce que** lesdites parois définissent au moins un élément de renforcement (21,34) au voisinage de ladite zone (23,41).

7. Procédé de moulage par injection d'un boîtier (19,27) de projecteur (18) de véhicule automobile, ledit boîtier (19,27) devant présenter une résistance mécanique inférieure à un seuil prédéterminé selon un axe longitudinal (AV-AR), les axes transversaux (D-G) et longitudinaux (AV-AR) dudit boîtier (19,27) étant définis respectivement par les directions transversales et longitudinales dudit véhicule, **caractérisé en ce que** ledit boîtier (19,27) est formé par au moins un flux (24) de matière plastique fondue dirigé substantiellement selon un axe transversal (D-G) dudit boîtier (19,27).

8. Procédé de moulage par injection d'un boîtier (19,27) de projecteur (18) de véhicule automobile selon la revendication 7, **caractérisé en ce que** ledit boîtier (19,27) est formé par au moins deux flux (24) antagonistes de matière plastique fondue dirigés substantiellement selon un axe transversal (D-G) dudit boîtier et formant une ligne de soudure (25,39) transversale entre la partie inférieure (22,43) et la partie supérieure (20,40) dudit boîtier (19,27).

9. Procédé de moulage par injection d'un boîtier (19,27) de projecteur (18) de véhicule automobile selon l'une quelconque des revendications 7 ou 8, **caractérisé en ce que** l'on forme dans une zone de transition entre la partie inférieure (22,43) et la partie supérieure (20,40) dudit boîtier (19,27) une surface présentant un rayon de courbure de faible valeur par rapport à l'épaisseur de ladite zone, de préférence inférieur au quart de l'épaisseur de ladite zone.

10. Procédé de moulage par injection d'un boîtier (19,27) de projecteur (18) de véhicule automobile selon l'une quelconque des revendications 7 à 9, **caractérisé en ce que** l'on forme dans la partie supérieure (20,40) dudit boîtier des nervures (21,34) de renforcement dirigées selon l'axe longitudinal (AV-AR) dudit boîtier (19,27).

11. Procédé de moulage par injection d'un boîtier (19,27) de projecteur (18) de véhicule automobile selon l'une quelconque des revendications 7 à 10, **caractérisé en ce que** ladite matière plastique est injectée, d'une part, au niveau de la partie supérieure du bord avant (31) dudit boîtier (27), et, d'autre part, à l'arrière dudit boîtier (27) au niveau de la partie supérieure du bord de l'ouverture (28) destinée à recevoir le bloc optique central inférieur dudit projecteur (18), l'avant (AV) et l'arrière (AR) dudit boîtier (27) étant définis respectivement par l'avant et l'arrière dudit véhicule.

12. Article en matière plastique (19,27) moulé par injection et comportant au moins une zone prédéterminée (23,41) présentant une résistance mécanique inférieure à un seuil prédéterminé selon une direction prédéterminée (AV-AR), **caractérisé en ce que** les chaînes polymériques de ladite matière plastique au niveau de ladite zone (23,41) sont substantiellement perpendiculaires à ladite direction prédéterminée (AV-AR).

13. Article en matière plastique selon la revendication 12, **caractérisé en ce qu'**il comporte au moins un élément de renforcement (21,34) au voisinage de ladite zone (23,41).

14. Article en matière plastique (19,27) selon la revendication 12 ou 13, **caractérisé en ce qu'**il est substantiellement séparable en au moins deux parties (20,22;40,43) de part et d'autre de ladite zone (23,41) sous l'action d'un effort d'intensité supérieure audit seuil dirigé selon ladite direction prédéterminée (AV-AR).

15. Projecteur (18) de véhicule automobile comportant un boîtier (19,27) présentant une résistance mécanique inférieure à un seuil prédéterminé selon un axe longitudinal (AV-AR), les axes transversaux (D-G) et longitudinaux (AV-AR) dudit boîtier (19,27) étant définis respectivement par les directions transversales et longitudinales dudit véhicule, **caractérisé en ce que** les chaînes polymériques de la matière plastique constituant ledit boîtier (19,27) sont substantiellement dirigées selon un axe transversal (D-G) dudit boîtier (19,27).
